Europäisches Patentamt

European Patent Office

Office européen des brevets

(19)

(11) Veröffentlichungsnummer: **0 161 673 B1**

# (12) EUROPÄISCHE PATENTSCHRIFT

(45) Veröffentlichungstag der Patentschrift: **23.10.91**

(51) Int. Cl.5: **G01N 27/48**

(21) Anmeldenummer: **85105949.3**

(22) Anmeldetag: **14.05.85**

(54) Verfahren zur Kontrolle des Laufzeitzustandes eines membranbedeckten polarographischen Sensors.

(30) Priorität: **15.05.84 DE 3418034**

(43) Veröffentlichungstag der Anmeldung:
**21.11.85 Patentblatt 85/47**

(45) Bekanntmachung des Hinweises auf die
Patenterteilung:
**23.10.91 Patentblatt 91/43**

(84) Benannte Vertragsstaaten:
**AT BE CH DE FR GB IT LI NL**

(56) Entgegenhaltungen:
**FR-A- 2 138 766**
**GB-A- 1 330 295**
**GB-A- 1 447 363**

(73) Patentinhaber: **WTW-**
**Wissenschaftlich-Technische -Werkstätten**
**GmbH**
**Trifthofstrasse 57a**
**W-8120 Weilheim(DE)**

(72) Erfinder: **Schuler, Peter, Dr.**
**Schmautzer-Weg 13**
**W-8084 Inning(DE)**
Erfinder: **Rommel, Klaus**
**Paterzell**
**W-8129 Wessobrunn(DE)**
Erfinder: **Herrnsdorf, Johannes**
**Am Anger 36**
**W-8126 Hohenpeissenberg(DE)**

(74) Vertreter: **Zipse + Habersack**
**Kemnatenstrasse 49**
**W-8000 München 19(DE)**

## Beschreibung

Die Erfindung betrifft ein Verfahren zur Kontrolle des Erschöpfungszustandes des Elektrolyten eines membranbedeckten polarographischen Sensors mit einer Arbeits-, einer Gegen- und einer Referenzelecktrode. Ein solches Verfahren soll den Anwender vor Fehlmessungen schützen oder ein Unbrauchbarwerden des Sensors verhindern.

Membranbedeckte polarographische Sensoren finden einen weiten Einsatz in der Erfassung von Gasen in wässrigen Lösungen und in der Gasphase. Zur Erläuterung der dem erfindungsgemäßen Verfahren zugrundeliegenden Problematik dient nachfolgend das Prinzip des von Clark entwickelten Sensors zur Messung von $O_2$. Ein solcher Sensor besteht generell aus einer einseitig offenen Kammer, deren Öffnung mit einer Membran abgedeckt ist. In die Kammer sind zwei Elektroden eingebaut, im allgemeinen eine Goldkathode (Arbeitselektrode) und eine Silberanode (Gegenelektrode). Der Raum hinter der Membran und zwischen den Elektroden ist mit einer wässrigen Kaliumchloridlösung oder einer anderen halogenidhaltigen Salzlösung gefüllt, dem sogenannten Elektrolyten. An die Elektroden wird eine Hilfsspannung von 700 ... 800 mV gelegt. Der durch die Membran diffundierende Sauerstoff wird an der Goldkathode zu Hydroxylionen reduziert, während an der Anode eine äquivalente Menge Silberchlorid gebildet und am Anodenkörper abgeschieden wird. Die Bruttoreaktion lautet

$$O_2 + 4 Ag + 4 Cl^- + 2 H_2O \rightarrow 4 AgCl + 4 OH^-$$

Die mit Silberchlorid belegte Anode liefert das stabile Bezugspotential, das zusammen mit der zwischen die Elektroden gelegten Hilfsspannung der Goldkathode das für die Sauerstoffreduktion erforderliche Potential aufprägt, siehe Busse, H.J. "Messungen von Sauerstoffspuren in Flüssigkeiten und Gasen mit elektrochemischen Elementanordnungen" 1974 VDI-Berichte 199, Seiten 107 - 115.

Bei dieser Betrachtungsweise sind einige Betriebszustände idealisiert dargestellt. In der Praxis stellt die Anode mit ihrem Aufbau eine Elektrode 2. Art dar: ein Leiter aus Silber ist mit Silberchlorid bedeckt und taucht in eine chloridhaltige Lösung. Mit dem Stoffumsatz an der Anode verringert sich die Chloridkonzentration des Elektrolyten, was eine Potentialänderung Anode/Elektrolyt bewirkt, und damit verändert sich auch das der Kathode aufgeprägte Reduktionspotential über der Laufzeit des Sensors. Kurz vor Erschöpfung des Halogenidvorrates treten weitere potentialverändernde Effekte auf, die in die Grössenordnung von 200 mV reichen können. Wird der Sensor bis in diesen Bereich betrieben, ist eine Reinigung der Anode unerläßlich, bevor der Sensor wieder mit frischem Elektrolyt gefüllt wird, siehe Schuler, P. und Herrnsdorf, J. "Zur Standzeit von Clark-Elektroden" Umwelt 682, Seite 378ff. Aus diesen Gründen ist es auch bei membranbedeckten Sensoren vorteilhaft und bekannt, bei erhöhter Anforderung an die Langzeitstabilität eine Referenzelektrode zusätzlich einzufügen und die gesamte Meßanordnung potentiostatisch zu betreiben. Die drei Elektroden werden so mit einem Potentiostaten verbunden, daß die Arbeitselektrode um die Polarisationsspannung $U_P$ negativer betrieben wird als die Referenzelektrode. Der Potentiostat arbeitet als Regler, der das Potential zwischen Arbeits- und Referenzelektrode konstant hält, indem er den Stromfluß zwischen Arbeits- und Gegenelektrode entsprechend ausregelt. Stellt man die Polarisationsspannung $U_P$ so ein, daß das Potential der Arbeitselektrode den Bereich des Diffusionsgrenzstromes abdeckt, so ist der ausgesteuerte Strom zwangsläufig mit dem vom Sauerstoffpartialdruck $pO_2$ abhängigen Diffusionsgrenzstrom identisch.

Der Erfindung liegt die Aufgabe zugrunde, für einen membranbedeckten polarographischen Sensor mit einer Arbeits-, einer Gegen- und einer Referenzelektrode ein Verfahren zu entwickeln, das eine Kontrolle des Erschöpfungszustandes des Elektrolyten erlaubt. Diese Aufgabe wird erfindungsgemäß mit einem Verfahren gelöst, wie es durch den Anspruch 1 gekennzeichnet ist. Weiterbildungen der Erfindung sind in den Unteransprüchen beschrieben.

Nach der Erfindung erfolgt die Überwachung der Potentialdifferenz $U_{RG}$ zwischen Referenz- und Gegenelektrode. Im bisherigen Anwendungsgebiet der Voltametrie bzw. Polarographie ist diese Potentialdifferenz ohne jeden Belang. Sie hängt ab von der Art der Referenzelektrode (dem Potential zur Lösung), der Anordnung der Referenzelektrode (innerhalb oder außerhalb der membranbedeckten Elektrodenkammer), der Lösungsimpedanz zwischen Referenz- und Gegenelektrode sowie dem Potential der Gegenelektrode gegen die Lösung. An Bedeutung gewinnt diese Potentialdifferenz erst in einem abgeschlossenen System mit wohldefinierten Verhältnissen, wie sie in einem membranbedeckten polarographischen Sensor vorliegen. Die Lösungsimpedanz ist praktisch konstant und der Spannungsabfall selbst bei Maximalstrom auch als Absolutwert vernachlässigbar. Nimmt man das Potential der Referenzelektrode als konstant an, so wird die Differenzspannung $U_{RG}$ allein vom Verhalten des Potentials der Gegenelektrode gegen den Elektrolyten bestimmt. Als Elektrode 2. Art verändert sie ihr Potential gemäß der Nernst-Gleichung

$$E = E_0 + \frac{RT}{nF} \log c$$

mit der Konzentration c des gelösten Chlorids im Elektrolyten und in geringem Maß mit der Temperatur T. Die Veränderung der Potentialdifferenz $U_{RG}$ ist somit ein Maß für die Änderung der Chloridkonzentration im Elektrolyten und erlaubt somit ohne Beeinflussung des Meßvorgangs kontinuierlich eine Beurteilung über den Erschöpfungszustand des Elektrolyten d. h. ob eine Erneuerung des Elektrolyten notwendig ist oder nicht.

Die beschriebene Anordnung setzt eine Potentialkonstanz der Referenzelektrode voraus, was bei ihrer Anordnung außerhalb der Membran als echte Bezugselektrode ohne weiteres erreichbar ist. Überraschend ist jedoch, daß die beschriebene Änderung von $U_{RG}$ auch dann beobachtet wird, wenn die Referenzelektrode als Elektrode zweiter Art in gemeinsamer Elektrolytlösung mit der Gegenelektrode innerhalb der Elektrodenkammer untergebracht wird. Dabei erfährt die Referenzelektrode zwar ebenfalls einen Potentialsprung, aber aufgrund von Diffusionsvorgängen zeitverzögert zur Gegenelektrode. Der zeitliche Verlauf der Potentialdifferenz $U_{RG}$ zeigt damit ein typisches Verhalten in Gestalt eines plötzlichen Anstieges zum Zeitpunkt des Potentialsprungs der Gegenelektrode, gefolgt von einer Wiederabnahme beim Zeitpunkt des Potentialsprungs der Referenzelektrode. Damit eignet sich das Verfahren besonders bevorzugt für potentiostatisch betriebene Sensoren mit einer Drei-Elektrodenanordnung, bei der das Potential der Arbeitselektrode gegen das der Referenzelektrode eingeregelt wird, jedoch ist eine solche potentiostatische Arbeitsweise nicht zwingend erforderlich. Ganz allgemein kann das Verfahren auch auf herkömmliche, nach dem Clark'schen Prinzip arbeitende Zwei-Elektroden Sensoren angewandt werden, indem die dritte Elektrode nur dazu verwendet wird, das Potential der Gegenelektrode zu überwachen, nicht gleichzeitig auch zu regeln.

Aus FR-A-2 138 766 ist die Überwachung der mechanischen Unversehrtheit der Membran eines polarographischen Sensors durch Anlegen einer Hilfsspannung zwischen der Anode und einer dritten Elektrode auf der anderen Seite der Sensormembran bekannt. Dabei wird der vorwiegend durch die Membran bestimmte Widerstand zwischen Anode und dritter Elektrode durch eine Strommessung erfaßt. Die Spannung zwischen den beiden Elektroden muß sich dabei nicht verändern und ist nicht die Überwachungsgröße, dient also auch nicht der Beurteilung des Funktionszustandes des Sensors.

Fig. 1    zeigt eine potentiostatisch arbeitende Anordnung mit Arbeitselektrode 1 (Kathode), Gegenelektrode 2 (Anode) und Referenzelektrode 3 die durch den Potentiostat 4 verbunden sind.

Fig. 2    zeigt einen Grenzwertschalter mit Sollwertvergleich zur Verarbeitung des Differenzspannungssignals.

Für die übliche Meßpraxis, zumal im Labor und bei einfach zu regenerierenden Sensoren, ist es ausreichend, allein das Ende der Laufzeit einer Elektrolytfüllung zu signalisieren. Dazu ist es ausreichend, die Referenzelektrode ebenfalls als Elektrode 2. Art innerhalb der Elektrodenkammer auszuführen. Sinkt die Konzentration des Chlorids unter einen bestimmten Wert, so verändert sich die Potentialdifferenz $U_{RG}$ zwischen der stromlosen Referenzelektrode und der stromdurchflossenen Gegenelektrode signifikant, so daß eine eindeutige Erkennung des Erschöpfungszustandes des Elektrolyten möglich ist. Die Veränderung der Potentialdifferenz kann leicht Werte von 100 mV und mehr annehmen.

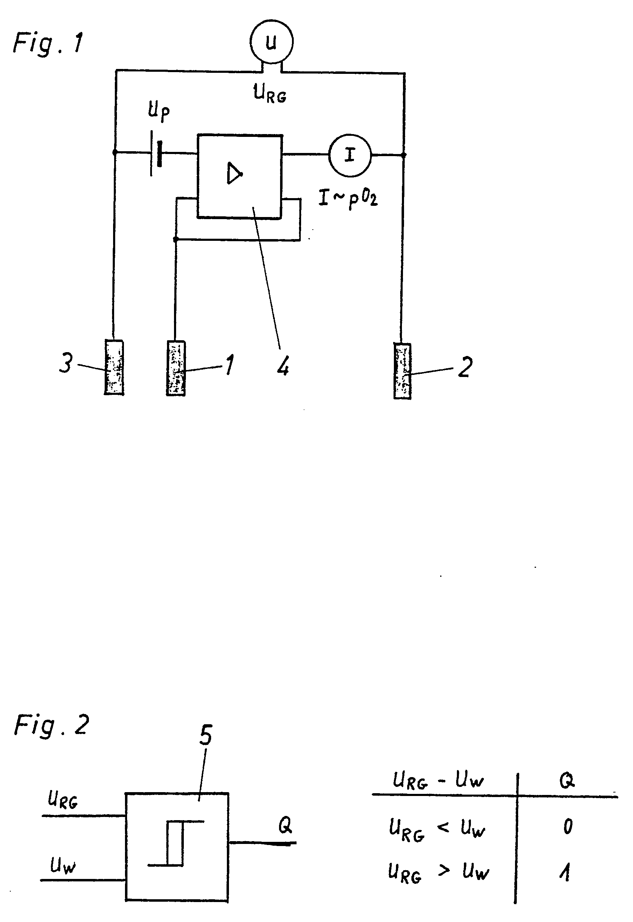

Die Auswertung solcher Potentialveränderungen ist auf verschiedene Weise möglich mit dem Fachmann bekannten Techniken. In einem analog arbeitenden Meßgerät werden nach Fig. 2 mittels Grenzwertschalter 5 die Potentialdifferenz $U_{RG}$ und eine Sollwertspannung $U_W$ verglichen. Übersteigt $U_{RG}$ den Wert von $U_W$, so schaltet die Anordnung und am Ausgang Q steht ein entsprechendes Signal zur Weiterverarbeitung bereit. Bei digital arbeitenden Geräten sind softwaremäßige Lösungen ausführbar, indem die Potentiale von Referenz- und Gegenelektrode zyklisch über einen Multiplexer auf einen Analog/Digitalwandler gegeben und der Vergleich z. B. mit einem im Programm gespeicherten Sollwert erfolgt. Als Ausgangssignal steht dann an einer entsprechenden Schnittstelle ein Signal zur Verfügung, das dem der analogen Ausführung gleicht. Je nach Aufgabe des Geräts können auch mehrere Grenzwerte gesetzt werden, die z. B. nach Erreichen der ersten Grenze ein Alarmsignal - beispielsweise eine Blinkschaltung - betätigen und nach Überschreiten einer zweiten Schwelle den Meßkreis des Sensors unterbrechen. Bei benutzergeführten Geräten sind entsprechende Hinweise in der Anzeige möglich. Die schließliche Unterbrechung des Meßkreises schützt den Anwender vor Fehlmessungen.

**Patentansprüche**

1.    Verfahren zur Kontrolle des Erschöpfungszustandes des Elektrolyten eines membranbedeckten polarographischen Sensors mit einer Arbeits-, einer Gegen- und einer Referenzelektrode, dadurch **gekennzeichnet**, daß zur Kontrolle der Änderung des Elektrolyten die sich ändernde Potentialdifferenz $U_{RG}$ zwischen Referenz (3)- und Gegenelektrode (2) erfaßt und die Veränderung der Potentialdifferenz als Maß für die Beurteilung über den Laufzeitzustand des Sensors herangezogen wird.

2. Verfahren nach Anspruch 1, dadurch **gekennzeichnet**, daß zusätzlich das Potential der Arbeitselektrode (1) mit Hilfe einer elektronischen Regelung auf einem konstanten Wert gegenüber der Referenzelektrode (3) gehalten wird.

3. Verfahren nach Anspruch 1 oder 2, dadurch **gekennzeichnet**, daß die Referenzelektrode (3) als Elektrode 2. Art in gemeinsamer Elektrolytlösung mit der Gegenelektrode (2) innerhalb der Elektrodenkammer untergebracht wird.

4. Verfahren nach einem der Ansprüche 1 bis 3, dadurch **gekennzeichnet**, daß die Potentialdifferenz $U_{RG}$ einem Sollwertvergleich unterworfen wird und Sollwertüberschreitungen der Meßaufgabe angepaßte Maßnahmen auslösen.

5. Verfahren nach einem der vorhergehenden Ansprüche, dadurch **gekennzeichnet**, daß mehrere Grenzwerte gesetzt und damit abgestufte Maßnahmen ausgelöst werden.

6. Verfahren nach einem der vorhergehenden Ansprüche, dadurch **gekennzeichnet**, daß die Potentiale der Referenz (3)- und der Gegenelektrode (2) über einen Multiplexer zyklisch abgefragt, einem Analog/Digitalwandler zugeführt und die digitalisierten Werte einem Rechner eingegeben werden, der Hinweise für die Beurteilung über den Laufzeitzustand des Sensors gibt.

7. Verfahren nach einem der vorhergehenden Ansprüche, dadurch **gekennzeichnet**, daß bei Erfassung einer bestimmten Veränderung der Potentialdifferenz $U_{RG}$ der Meßkreis des Sensors geöffnet wird.

**Claims**

1. Method of monitoring the state of exhaustion of the electrolyte of a membrane-covered polarographic sensor with a working, a counter- and a reference electrode, characterised in that for monitoring the change in the electrolyte, the changing difference of potential $U_{RG}$ between the reference electrode (3) and the counter-electrode (2) is detected and the variation in the difference of potential is used as a measure for evaluating the state of the duration of working of the sensor.

2. Method according to claim 1, characterised in that in addition the potential of the working electrode (1) is kept at a constant value with respect to the reference electrode (3) with the aid of electronic control.

3. Method according to claim 1 or 2, characterised in that the reference electrode (3) is accommodated as electrode of 2nd type inside the electrode chamber with the counter-electrode (2) in a common electrolyte solution.

4. Method according to any one of claims 1 to 3, characterised in that the difference of potential $U_{RG}$ is subjected to a nominal value comparison and exceeding of the nominal value initiates steps suited to the measuring task.

5. Method according to any one of the preceding claims, characterised in that a plurality of limit values is set and graded steps are thereby initiated.

6. Method according to any one of the preceding claims, characterised in that the potentials of the reference electrode (3) and the counter-electrode (2) are cyclically interrogated by way of a multiplexer, fed to an analog/digital converter and the digitized values are input to a computer which gives pointers for the evaluation of the state of the duration of working of the sensor.

7. Method according to any one of the preceding claims, characterised in that on detection of a certain change in the difference of potential $U_{RG}$ the measuring circuit of the sensor is opened.

**Revendications**

1. Procédé pour le contrôle de l'état d'épuisement de l'électrolyte d'un appareil détecteur polarographique recouvert d'une membrane et comportant une électrode de travail, une contre-électrode et une électrode de référence, caractérisé en ce que, pour le contrôle de la modification de l'électrolyte, la différence de potentiel $U_{RG}$ variable entre l'électrode (3) de référence et la contre-électrode (2) est déterminée, et en ce que la variation de la différence de potentiel est utilisée comme mesure permettant de juger de l'état de fatigue de l'appareil détecteur.

2. Procédé selon la revendication 1, caractérisé en ce qu'en plus le potentiel de l'électrode de travail (1) est, à l'aide d'un dispositif de réglage électronique, maintenu à une valeur constante par rapport à l'électrode (3) de référence.

3. Procédé selon l'une des revendications 1 ou 2, caractérisé en ce que l'électrode (3) de référence est, en tant qu'électrode de 2ème type, placée dans la solution d'électrolyte commune avec la contre-électrode (2) à l'intérieur de la chambre à électrodes.

4. Procédé selon l'une des revendications 1 à 3, caractérisé en ce que la différence $U_{RG}$ de potentiel est comparée à une valeur de consigne et en ce que des dépassements de cette valeur déclenchent des réactions appropriées à la tâche de mesure.

5. Procédé selon l'une des revendications précédentes, caractérisé en ce qu'il implique plusieurs valeurs limites et, par conséquent, des réactions échelonnées.

6. Procédé selon l'une des revendications précédentes, caractérisé en ce que les potentiels de l'électrode (3) de référence et de la contre-électrode (2) font l'objet d'une interrogation cyclique par l'intermédiaire d'un multiplexeur, que la réponse est envoyée à un convertisseur analogique/numérique, et que les valeurs numériques obtenues sont envoyées à une calculatrice qui fournit des indications permettant de juger de l'état de fatigue de l'appareil détecteur.

7. Procédé selon l'une des revendications précédentes, caractérisé en ce que, lorsque la variation de différence $U_{RG}$ de potentiel atteint une valeur déterminée, le circuit de mesure de l'appareil détecteur s'ouvre.

Fig. 1

Fig. 2

| $U_{RG} - U_W$ | $Q$ |
|---|---|
| $U_{RG} < U_W$ | 0 |
| $U_{RG} > U_W$ | 1 |